# EUROPÄISCHE PATENTSCHRIFT

(11) **EP 0 861 650 B1**
(45) Veröffentlichungstag und Bekanntmachung des Hinweises auf die Patenterteilung: **01.09.2004**
(21) Anmeldenummer: 97122696.4
(22) Anmeldetag: 22.12.1997
(51) Int. Cl.: A61G 15/16

(54) **Einrichtung zur Erkennung der Entnahme eines an einen Versorgungsschlauch angeschlossenen zahnärztlichen Handstückes aus einer Ablagevorrichtung**
Device for detecting the removal from its holder of a dental handpiece which is connected to a supply line
Dispositif pour détecter l'enlèvement d'une pièce à main connectée à une conduite d'alimentation de son support

(30) Priorität: 28.01.1997 DE 19702996
(43) Veröffentlichungstag der Anmeldung: 02.09.1998
(73) Patentinhaber: Sirona Dental Systems GmbH, 64625 Bensheim (DE)
(72) Erfinder: Behringer, Wolfgang, Dipl.Ing., 64625 Bensheim (DE)
(74) Vertreter: Sommer, Peter

(56) Entgegenhaltungen:
- EP-A- 0 005 791
- DE-A- 3 611 059
- US-A- 5 185 532

## Beschreibung

In der Dentaltechnik ist es bekannt, die Handstücke bzw. deren Versorgungsmedien bei Entnahme der Handstücke aus den ihnen zugeordneten Ablagevorrichtungen vorzuwählen oder aktiv zu schalten. Hierzu befinden sich in oder an den Ablagevorrichtungen entsprechend ausgebildete Schaltelemente.Die Schaltelemente können Mikroschalter, Lichtschranken oder auch induktive Sensoren sein. (EP-0 005 791-B1).

Nachteilig bei solchen Einrichtungen ist, daß praktisch an jeder Ablagevorrichtung auf die Handstücke abgestimmte Schaltelemente vorhanden sein müssen. Nachdem die Ablagevorrichtungen in der Regel als nach Art eines offenen Ringes gestaltete Ablageklauen ausgebildet sind, ist es beispielsweise bei Anordnung einer Lichtschranke notwendig, für jede Ablageklaue einen Sender und einen Empfänger vorzusehen. Bei der heute üblichen Bestückung eines zahnärztlichen Gerätes mit mindestens vier bis sechs Handstücken bedeutet dies, daß, selbst wenn weniger Handstücke benutzt bzw. vom Arzt gewünscht werden, stets die der maximalen Handstückbestückung entsprechende Anzahl von Lichtschranken vorgesehen werden muß.

Weitere Nachteile sind darin zu sehen, daß durch Umwelt- oder andere Einflüsse Störungen an Sender oder Empfänger auftreten können. Bei Lichtschranken kann es beispielsweise durch Fremdlichteinfall oder Verschmutzungen zu Störungen kommen. Auch Ausführungen mit mechanischen Schaltelementen sind nicht frei von Störungen. Durch häufiges Schalten kann z.B. die Justage verstellt oder abgenutzt werden, so daß die Schaltelemente nicht mehr zuverlässig arbeiten.

Ein weiterer, wesentlicher Nachteil bei den bekannten Ausführungen ist, daß ein Ablegen eines Handstückes an einer anderen Stelle, z.B. an einer Zwischenablage eines Trays, nicht oder nur durch zusätzliche manuelle Schaltvorgänge möglich ist.

Der im Anspruch 1 angegebenen Erfindung liegt die Aufgabe zugrunde, eine Einrichtung zur Erkennung der Entnahme eines an einem Versorgungsschlauch angeschlossenen Handstückes aus einer Ablagevorrichtung zu schaffen, mit der die vorgenannten Nachteile vermieden werden können. Es ist insbesondere anzustreben, eine sichere Erkennung eines entnommenen oder verwendeten Handstückes zu ermöglichen, und zwar unabhängig davon, wo das Handstück zuvor abgelegt war.

Dadurch, daß erfindungsgemäß ein Schaltelement vorgesehen ist, welches eine Änderung eines elektrischen oder magnetischen Feldes erfaßt, oder von einem solchen Feld beeinflußbar ist, wenn das Handstück aus einer Ablage entnommen bzw. in eine Ablage zurückgeführt wird, daß das Schaltelement an dem dem Handstück zugewandten Ende des Versorgungsschlauches angeordnet ist,und dasjenige Teil, welches das Feld ändert bzw. beeinflußt, der Ablagevorrichtung zugeordnet ist, kann jede beliebige Ablagevorrichtung für jedes Instrument genutzt werden. Es braucht deshalb weder eine ganz spezielle auf ein bestimmtes Handstück abgestellte Ablagevorrichtung mit justierten Schaltelementen vorgesehen zu werden, noch braucht das Handstück selbst in bezug auf die Erkennung der Entnahme des Handstückes ausgebildet zu sein. Dieser Aspekt ist insofern von Bedeutung, als die Handstücke an sich häufiger gewechselt werden müssen als der Versorgungsschlauch.

Das im Versorgungsschlauch auf der handstückseitigen Schlauchkupplung anzuordnende Schaltelement kann ein kleiner Reed-Schalter, eine induktive Spule oder auch ein kapazitiver Empfänger sein. An der Ablagevorrichtung selbst braucht lediglich entweder ein magnetisches oder nichtmagnetisches metallisches Teil angeordnet zu sein. Durch das Metall- oder Magnetteil, welches gegebenenfalls vom Arzt selbst in die Ablagevorrichtung eingesetzt werden kann, meldet das Handstück, ob es in der Ablagevorrichtung liegt oder aus dieser entnommen ist. Die Ablagevorrichtungen können an beliebiger Stelle angeordnet sein; sie brauchen deshalb keine feste Zuordnung zu einem Handstück zu haben. Dadurch kann ein ergonomisch günstigeres Arbeiten erreicht werden. Ebenso ist eine preisgünstigere Herstellung des gesamten Dentalgerätes möglich.

Besondere Vorteile sind darin zu sehen, daß an beliebiger Stelle eines zahnärztlichen Arbeitsplatzes eine sogenannte Schnell- oder Zwischenablage vorgesehen werden kann. Ein weiterer Vorteil ist darin zu sehen, daß zu den Ablagevorrichtungen keine elektrischen, pneumatischen oder anderweitigen Zuleitungen geführt werden müssen.

Nachfolgend werden zwei Ausführungsbeispiele der Erfindung näher beschrieben.
Es zeigen:
Figur 1 ein zahnärztliches Arbeitsgerät in einer Übersichtsdarstellung mit mehreren Handstücken und mehreren Ablagevorrichtungen,
Figur 2 eine Detaildarstellung von Figur 1,
Figur 3 eine erste Ausführungsform einer Anordnung eines Schaltelements an der handstückseitigen Schlaucharmatur,
Figur 4 ein Prinzipschaltbild für die Ausführung nach Figur 3.
Figur 5 eine zweite Ausführungsform einer Anordnung eines Schaltelements an der handstückseitigen Schlaucharmatur.

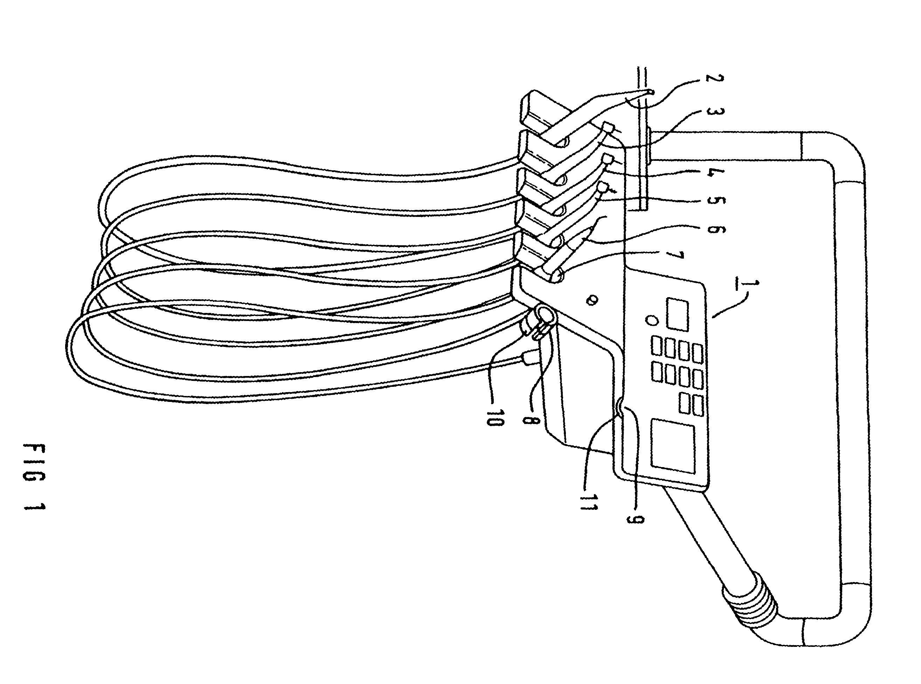

Die Figur 1 zeigt in einer schaubildlichen Darstellung einen Ausschnitt eines zahnärztlichen Arbeitsplatzes mit einem Behandlungsgerät 1, welches mehrere Handstücke 2 bis 6 enthält. Die Handstücke 2 bis 6 sind unterschiedlich gestaltet und haben auch unterschiedliche Funktionen. Das Handstück 2 ist ein Spritzhandstück, die Handstücke 3 bis 5 sind Bohrhandstücke, das Handstück 6 ist ein Zahnsteinentfernungshandstück. Die den Handstücken 2 bis 6 zugeordneten Ablagevorrichtungen sind mit dem Bezugszeichen 7 versehen.

Zusätzlich zu diesen Ablagevorrichtungen enthält das Behandlungsgerät zwei weitere Ablagevorrichtungen 8 und 9, die zur Zwischenablage eines der Handstücke 2 bis 6 dienen. Während die Ablagevorrichtung 8 ähnlich aufgebaut ist wie die Ablagevorrichtungen 7, ist die Ablagevorrichtung als waagerechte Ablagemulde ausgebildet.

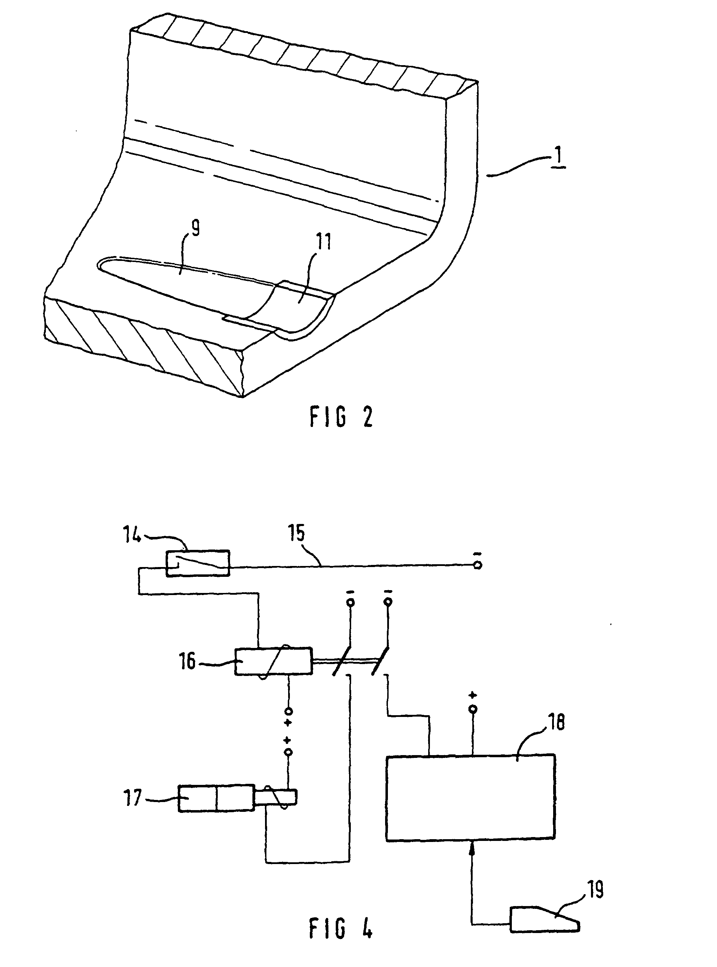

Die Figur 2 zeigt diese Ablagemulde in vergrößerter Darstellung.

Die Ablagevorrichtungen 7 bis 9 enthalten an ihren, den Versorgungsschläuchen zugewandten Enden ein Einsatz- oder Ansatzteil 10, 11, welches mit einem im handstückseitigen Anschlußteil des Versorgungsschlauches angeordneten Schaltelement zusammenwirkt, wie dies später noch erläutert wird. Das Einsatz-/Ansatzteil 10, 11 kann, je nachdem, welches Schaltelement im Anschlußteil des Versorgungsschlauches verwendet wird, ein Permanentmagnet oder ein metallisches Teil sein. Vorteilhafterweise sind die Teile auswechselbar gehaltert. Bei der Ablagevorrichtung 9 kann dies eine herausnehmbare Halbschale sein, bei den Ablagevorrichtungen 7 und 8 kann ein offener Ring, der der Ablagevorrichtung angepaßt an der Unterseite angebracht ist, vorgesehen sein.

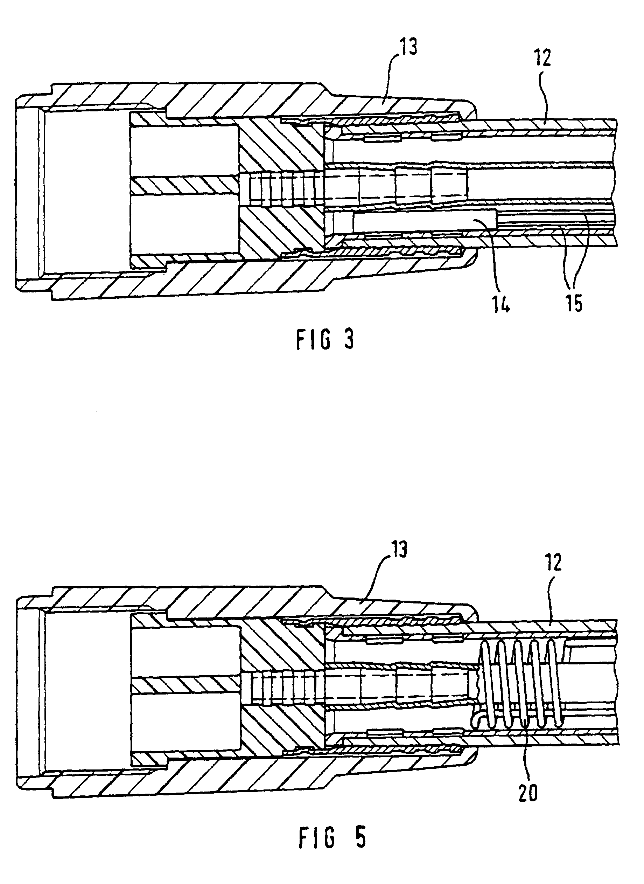

Die Figur 3 zeigt in einem Längsschnitt das handstückseitige Endstück eines Versorgungsschlauches 12 mit einer Anschlußarmatur 13 für den Anschluß eines der Handstücke 2 bis 6. Die Anschlußarmatur 13 enthält außer den nicht näher bezeichneten Anschlüssen für die Medienleitungen einen Reed-Schalter 14, welcher über elektrische Leitungen 15 entsprechend dem Blockschaltbild nach Figur 4 geschaltet ist. Der Reed-Schalter 14 wirkt mit einem Permanentmagneten zusammen, der in der vorerwähnten Weise als Ansatzteil 10 oder Einsatzteil 11 in den Ablagevorrichtungen 7 bis 9 angeordnet ist. Der Reed-Schalter 14 spricht an, wenn ein Handstück aus der Ablage entnommen wird bzw. in diese Ablage zurückgelegt wird.

In Betrachtung der Figur 4, die ein Blockschaltbild mit einem solchen Reed-Schalter zeigt, ist erkennbar, daß der Kontakt des Reed-Schalters 14 offen ist. Diese Schaltstellung entspricht dem abgelegten Zustand. Wird ein Handstück aus der Ablagevorrichtung entnommen, wird der Kontakt geschlossen und damit ein Relais 16 geschaltet, wodurch ein Vorwahlmagnetventil 17 zur Steuerung des Durchflusses der Medien Luft und/oder Wasser aus einer Leistungselektronik 18 freigeschaltet wird. Die Freischaltung kann in bekannter Weise über einen Fußschalter 19 erfolgen.

Dadurch, daß der Reed-Schalter 14 im abgelegten Zustand eines Handstückes offen, dagegen im entnommenen Zustand geschlossen ist, kann beispielsweise ein Leitungsbruch überwacht werden. Außerdem hat diese Schaltart den Vorteil, daß, wenn kein Handstück an die Schlauchkupplung angeschlossen ist, die Ausgänge gesperrt sind.

Die Figur 5 zeigt eine zweite Variante einer Ausführung mit einer Magnetspule 20, die in bekannter Weise einen nicht näher gezeigten Schwingkreis bildet, der durch ein metallisches Teil in den Ablagevorrichtungen verstimmt wird. Mit dieser Feldbeeinflussung kann zunächst die Entnahme des Handstückes erkannt und sodann ein Schaltsignal auf ein Vorwahlmagnetventil zur Steuerung des Mediendurchflusses in der vorbeschriebenen Weise abgegeben werden.

## Patentansprüche

1. Einrichtung zur Erkennung der Entnahme eines an einen Versorgungsschlauch (12) angeschlossenen zahnärztlichen Handstückes (2 bis 6) aus einer Ablagevorrichtung (7, 8, 9), enthaltend einen Schaltkreis mit einem Schaltelement (14, 20), welches eine Änderung eines elektrischen oder magnetischen Feldes erfaßt oder von einem solchen Feld beeinflußbar ist, wenn das Handstück aus einer Ablagevorrichtung entnommen bzw. in eine Ablagevorrichtung zurückgeführt wird, wobei das Schaltelement (14, 20) in dem dem Handstück zugewandten Endteil des Versorgungsschlauches (12), vorzugsweise in der Anschlußarmatur (13) des Versorgungsschlauches, und das das Feld ändernde bzw. beeinflussende Teil (10, 11) der Ablagevorrichtung (7, 8, 9) zugeordnet ist.

2. Einrichtung nach Anspruch 1 **dadurch gekennzeichnet, daß** als Schaltelement ein Reed-Schalter (14) vorgesehen ist, der von einem an der Ablagevorrichtung (7, 8, 9) angeordneten Permanentmagneten (11) aktiviert wird.

3. Einrichtung nach Anspruch 2 **dadurch gekennzeichnet, daß** der Reed-Schalter (14) und ein mit diesem zusammenwirkendes Relais (16) so geschaltet sind, daß im abgelegtem Zustand eines Handstückes der Schaltkontakt offen ist.

4. Einrichtung nach Anspruch 1 **dadurch gekennzeichnet, daß** als Schaltelement eine Magnetspule (20) vorgesehen ist, die Teil eines Schwingkreises ist, der von einem an der Ablagevorrichtung (7, 8, 9) angeordneten metallischen Teil (10, 11) beeinflußt wird.

## Claims

1. A system for sensing the removal of a dental handpiece (2-6) attached to a flexible supply pipe (12) from a rack unit (7, 8, 9), comprising a switching circuit incorporating a switching element (14, 20) which registers a change in an electric or magnetic field or is capable of being controlled by such a field when the handpiece is taken from, or returned to, a rack unit, wherein said switching element (14, 20) is disposed in that end part of said flexible supply pipe (12) which is near said handpiece, preferably in the connector (13) of said flexible supply pipe, and the part (10, 11) which changes or controls the field is assigned to said rack unit (7, 8, 9).

2. A system as defined in claim 1, **characterized in that** the switching element used is a reed switch (14) which is activated by a permanent magnet (11) disposed in said rack unit (7, 8, 9).

3. A system as defined in claim 2, **characterized in that** said reed switch (14) and a cooperating relay (16) are electrically interconnected such that the make-and-break contact is open when a handpiece is in the rack.

4. A system as defined in claim 1, **characterized in that** the switching element used is a solenoid (20) which forms part of an oscillator circuit that is controlled by a metallic part (10, 11) disposed in said rack unit (7, 8, 9).

## Revendications

1. Dispositif pour détecter l'enlèvement d'une pièce à main dentaire (2 à 6) connectée à une conduite d'alimentation (12) d'un dispositif de support (7, 8, 9), contenant un circuit avec un élément de commutation (14, 20) qui détecte une variation d'un champ électrique ou magnétique ou qui peut être influencé par un tel champ lorsque la pièce à main est enlevée d'un dispositif de support ou est remise dans un dispositif de support, l'élément de commutation (14, 20) étant disposé dans la partie d'extrémité de la conduite d'alimentation (12) tournée vers la pièce à main, de préférence dans la ferrure de raccordement (13) de la conduite d'alimentation, et la pièce (10, 11) modifiant ou influençant le champ étant associée au dispositif de support (7, 8, 9).

2. Dispositif selon la revendication 1, **caractérisé en ce que** l'on prévoit comme élément de commutation un commutateur à tiges (14) qui est activé par un aimant permanent (11) disposé sur le dispositif de support (7, 8, 9).

3. Dispositif selon la revendication 2, **caractérisé en ce que** le commutateur à tiges (14) et un relais (16) coopérant avec lui sont montés de telle sorte que dans l'état déposé d'une pièce à main, le contact de commutation soit ouvert.

4. Dispositif selon la revendication 1, **caractérisé en ce que** l'on prévoit comme élément de commutation une bobine magnétique (20), qui fait partie d'un circuit oscillant qui est influencé par une pièce métallique (10, 11) disposée sur le dispositif de support (7, 8, 9).
